Europäisches Patentamt

European Patent Office

Office européen des brevets

(11) Publication number: **0 105 687**
**A1**

## (12) EUROPEAN PATENT APPLICATION

(21) Application number: 83305720.1

(22) Date of filing: 26.09.83

(51) Int. Cl.³: **F 04 D 13/06**
**H 02 K 5/128**

(30) Priority: 27.09.82 US 424843
20.09.83

(43) Date of publication of application:
18.04.84 Bulletin 84/16

(84) Designated Contracting States:
DE FR GB IT

(71) Applicant: MILTON ROY CO.
One Plaza Place, N.E.
St. Petersburg Florida 33701(US)

(72) Inventor: Bingler, Douglas J.
Pa. Rt. 263 P.O. Box 235
Furlong Pennsylvania 18925(US)

(74) Representative: Evans, David Charles et al,
F.J. CLEVELAND & COMPANY 40-43, Chancery Lane
London, WC2A 1JQ(GB)

(54) Electronically commutated electric pump.

(57) A shaftless pump apparatus (10) has a rotary impeller (18) incorporating a permanent magnet (24) and is driven by a plurality of stator elements (26a-d) selectively activated by control circuit means (32) to create a rotating magnetic field torquing the impeller (18), the only rotating component of the apparatus. The stator elements (26a-d) are activated as a function of angular position of the impeller (18) providing performance equivalent to a DC motor drive. Preferably, Hall effect switches (30a, b) are used to sense impeller angle position for controlling the motor drive.

FIG. 1

EP 0 105 687 A1

"ELECTRONICALLY COMMUTATED ELECTRIC PUMP"

DESCRIPTION

This invention relates to pumps and in particular to electrically powered pumps not requiring a drive shaft or drive shaft seals between impeller means of the pump and motor means driving the impeller means.

Shaftless, electrically powered pumps are generally known. Magnetically coupled pumps such as are described, for example, in U.S. Patent Specifications Nos. 3,938,914, 3,932,069 and 3,802,804, typically incorporate a rotary impeller having a cylindrical magnet or comparable magnetic means positioned about the central hub of the impeller. A conventional DC or AC motor drives a shaft on which is mounted one or more permanent magnets. The motor and shaft with magnets are separated from the impeller by a wall of the pump housing. A magnetic coupling created through the housing wall between the impeller magnet(s) and the shaft driven magnets causes the impeller to follow

- 2 -

the rotation of the shaft. This arrangement allows the use of a DC or, if desired, AC motor and eliminates the necessity of a shaft seal in the all of the pump chamber. The latter feature reduces the maintenance requirements of such a pump and eliminates a major source of pump failure.

Another type of shaftless pump is that of the type described in U.S. Patent Specification No. 3,171,072. Here the shaft and permanent magnets are eliminated and the size of the pump is reduced by using the pump impeller as the armature of the motor. Stator elements positioned about the impeller are sequentially energized by direct current or a direct current passing through the stator elements is reversed at an appropriate time by a control circuit, typically employing transistors, so as to create a rotating magnetic field among the stator elements driving the rotor/armature. While DC powered, these motor/pump devices operate like AC induction motors. The rotor/armature is typically a squirrel cage, wound wire or other inductive armature construction while the energization or switch of energization in the stator elements is controlled independently of rotor speed. These motor/pump devices exhibit the same limitations typically found in AC motor powered pumps: low starting torque, low operating efficiencies and limited range of operating speeds. While control circuits are known which, to some extent, overcome these problems (see, for example, U.S. Patent Specification Nos. 3,365,636, 3,324,368 and 3,281,631) such circuits are not sufficient to provide the superior initial starting torque and efficiencies of DC motor powered pumps.

According to this invention, a pump housing is provided having a fluid inlet, fluid outlet and a pump chamber in fluid communication with the inlet and the outlet. Rotary impeller means are provided in the pump chamber for moving fluid from the inlet through the outlet. The impeller means incorporate permanent magent means providing at least a pair of opposite magnetic poles in a plane parallel to the plane of rotation of the impeller means. Also provided in the housing and spaced from the impeller means are a plurality of stator elements positioned in a plane also parallel to said plane of rotation of the impeller means for torquing the impeller means. Each stator element typically comprises a stator pole and one or more windings about the pole. Means for sensing angular positions of the impeller means, such as Hall effect switches are provided for motor control. Control means responsive to the sensor means selectively provides electrical currents to the stator elements to create a rotating magnetic field among the stator elements driving said impeller means. A variety of two phase and polyphase pump/motor combinations as well as a variety of pump/motor configurations are possible. The impeller, which also acts as the motor armature, is the only moving component of the apparatus. Becuse the impeller is driven magnetically, the need for a drive shaft extending through the pump chamber wall and a seal for the shaft are eliminated.

Following is a description by way of example only and with reference to the accompanying drawings of methods of carrying the invention into effect.

In the drawings:-

Figure 1 is a diagrammatic side view of a first envisioned centrifugal pump according to the present invention;

- 5 -

Figure 2 is an overhead view of the pump of Figure 1 sectioned along the line 2-2 showing the position of the impeller permanent magnet, the stator elements and the angular position sensors;

Figure 3 comprises two graphs, a and b, graph a depicting the torque output of two of the stator elements with respect to impeller angle position and graph b depicting the optimized torque output when the stator elements are switched;

Figure 4 is a block diagram for control logic sequentially energizing the stator elements of Figures 1 and 2;

FIG. 5 depicts signals outputted by the position sensors and control signals outputted by circuitry controlling the energization of the stator elements;

FIG's. 6a and 6b depict in diagrammatic side and end views, a second envisioned centrifugal pump/motor configuration of the present invention;

FIG's. 7a and 7b depict in diagrammatic side and end views a third envisioned centrifugal pump/motor configuration of the present invention; and

FIG. 8 depicts in sectioned form a fourth envisioned centrifugal pump/motor configuration of the present invention.

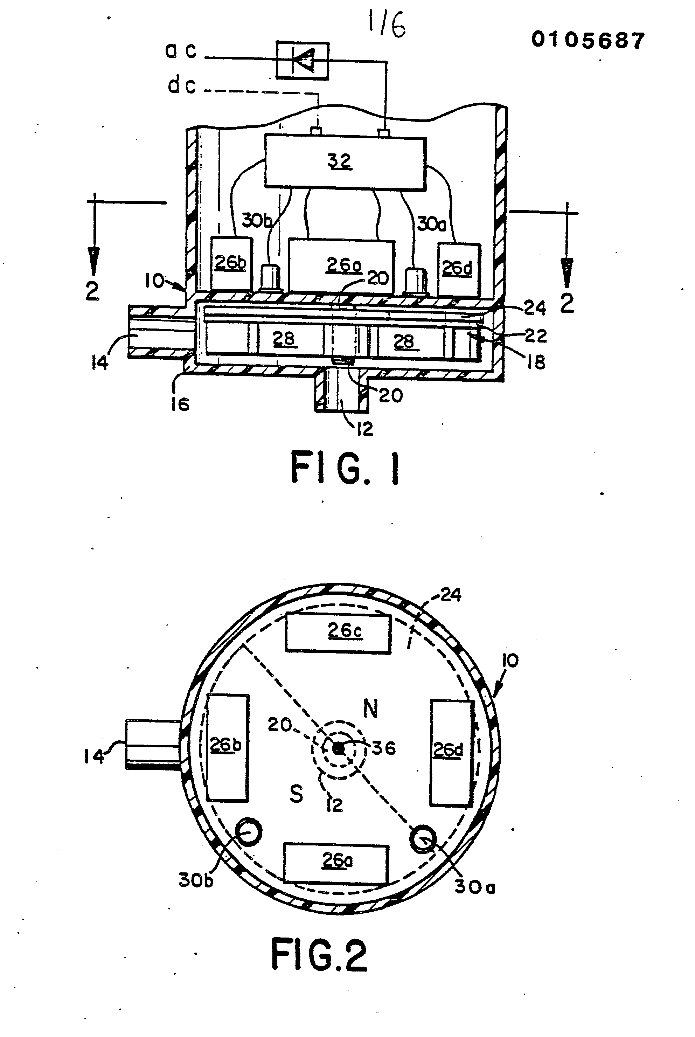

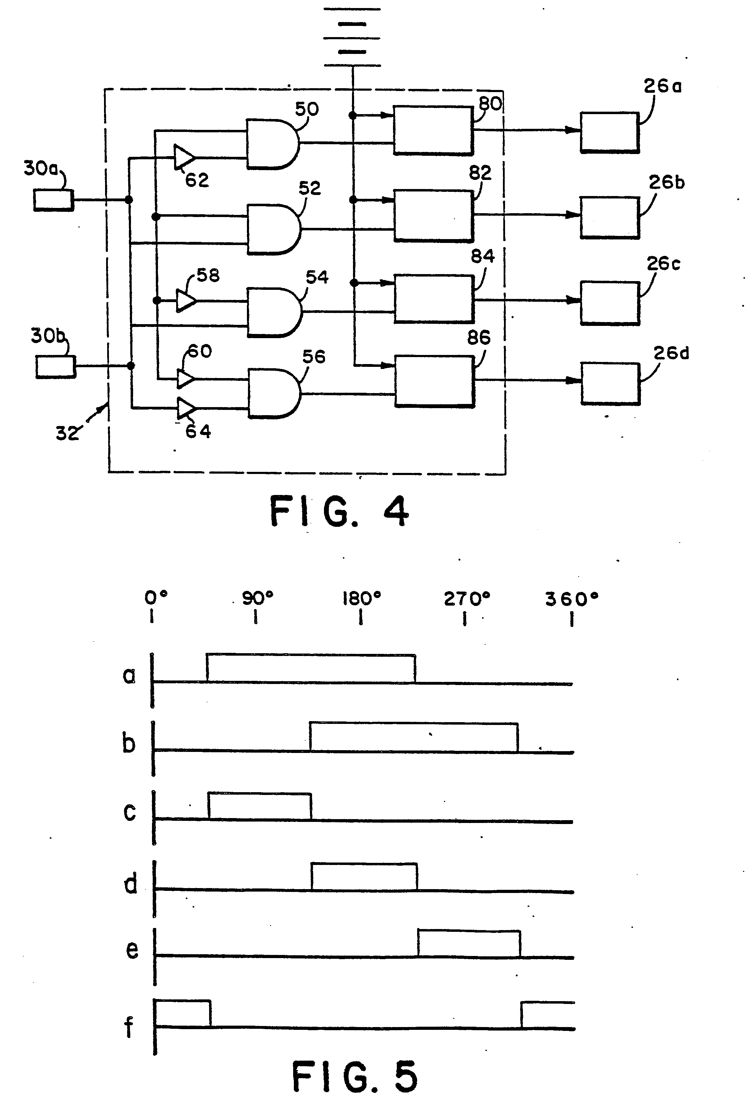

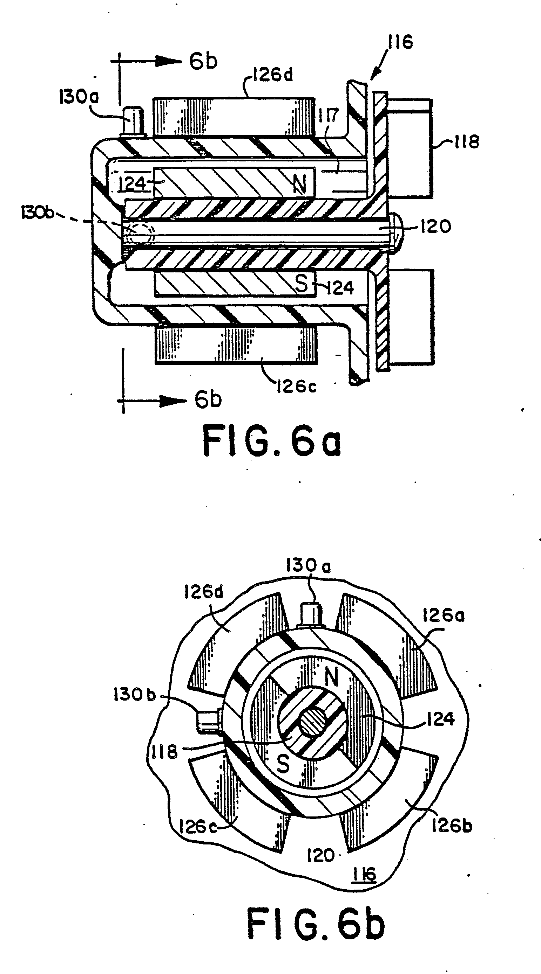

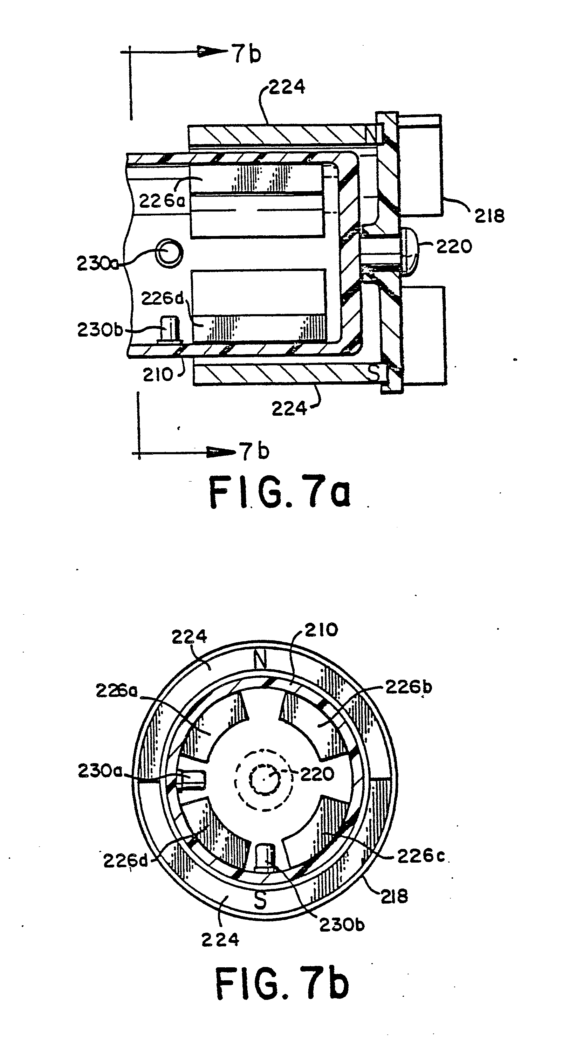

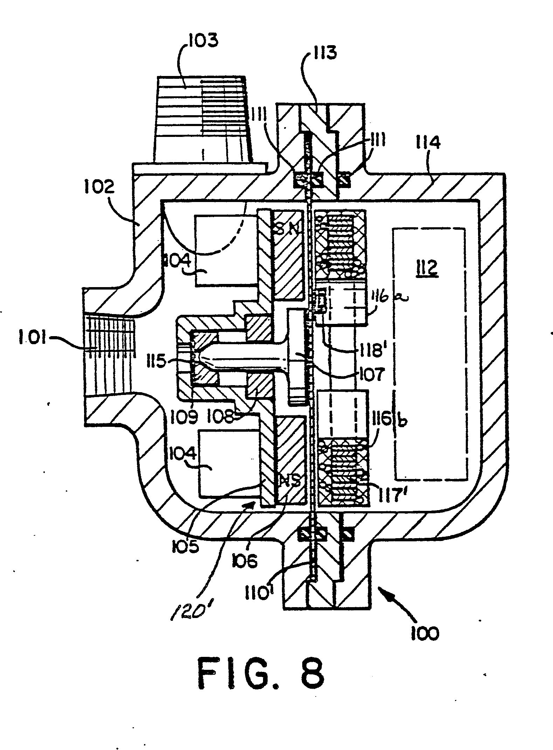

FIG. 1 depicts diagrammatically an embodiment of the present invention, having a two phased, DC centrifugal pump/motor apparatus of parallel or "pancake" configuration. A pump housing or casing 10 having a fluid inlet 12 and fluid outlet 14 is provided with a hollow interior forming a pump chamber 16 in fluid communication with the inlet 12 and outlet 14. Within chamber 16 is a rotary impeller assembly 18 supported for free rotation within the pump chamber 16 by suitable means such as an axle 20. The rotary impeller structure 18 comprises a base 22 incorporating a circular permanent magnet 24 and a plurality of vanes 28. The circular permanent magnet 24 and its two magnetic poles lie in a plane parallel to the plane of rotation of the impeller assembly 18. Arrayed in a second plane parallel to the plane of rotation of the impeller assembly 18 are a plurality of stator elements 26a through 26d. Element 26c is hidden behind 26a in this view. Each element comprises a magnetizable core and one or more windings about the core which, when energized by an electric current, create a magnetic field imparting a torque on the rotor assembly 18. The stator elements 26a-26d may be fixed by suitable means to the housing or incorporated into the housing 10 by suitable manufacturing techniques, such as forming the housing 10 from plastic material in which the stator elements 26 are embedded. Also provided are two Hall effect switches 30a and 30b for determining angular positions of the impeller assembly 18. Although other sensors such as optical transducing systems may be employed, possible opacity of fluid in the pump chamber 16 may limit their usefulness. The Hall effect switches 30a and 30b output a high level signal when one of the two magnetic polarities (N or S) of the circular magnet 24 is opposite the switch 30a or 30b. If desired, commutation magnets (not depicted) may be incorporated into the impeller assembly 18 so as to pass opposite the switches 30a and 30b and more precisely trigger their operation. The use of commutating magnets in brushless, electronically switched DC motors is taught, for example, in U.S. Patent 4,311,933 incorporated in its entirety by reference herein. Output of the sensing means 30a and 30b are fed to control circuit 32, further described with respect to FIG.4. Direct current is supplied to the stator elements 28 by means of the control circuit 32. As is depicted in FIG. 1, direct current may be supplied to the control circuit 32 directly or by means of rectifying an alternate current, as is well known.

FIG. 2 depicts diagrammatically in a sectioned overhead view of the apparatus of FIG. 1, the orientation of the circular two pole permanent magnet 24 of the impeller assembly 18, four stator elements 26a through 26d and two Hall effect switches 30a and 30b, together with the axis of rotation 36 of the impeller assembly 18 with magnet 24, the inlet 12 and the axle 20. Each of the stator elements 26a through 26d is energized sequentially by the control circuit 32 so as to create a magnetic field rotating clockwise in the plane of rotation of the impeller structure 18 as viewed in Fig. 2. Of course, the field could be made to rotate in the opposite direction. By properly timing and controlling the magnetic field created by each of the stator elements 26a-26d the permanent magnet 24 and impeller 18 can be made to rotate following a magnetic field rotating among the stator elements 26a-26d. If desired, opposite pairs of stator elements (i.e. 26a with 26c and 26b with 26d) may be energized by the control circuit 32 with opposite polarities to increase torque. This may be accomplished by conventional means such as providing a pair of opposing windings on each stator element and supplying a single current through all windings or by supplying reversed currents through identical windings. For simplicity, the invention will be described solely with respect to rotating a magnetic field of a single polarity about the stator elements 26.

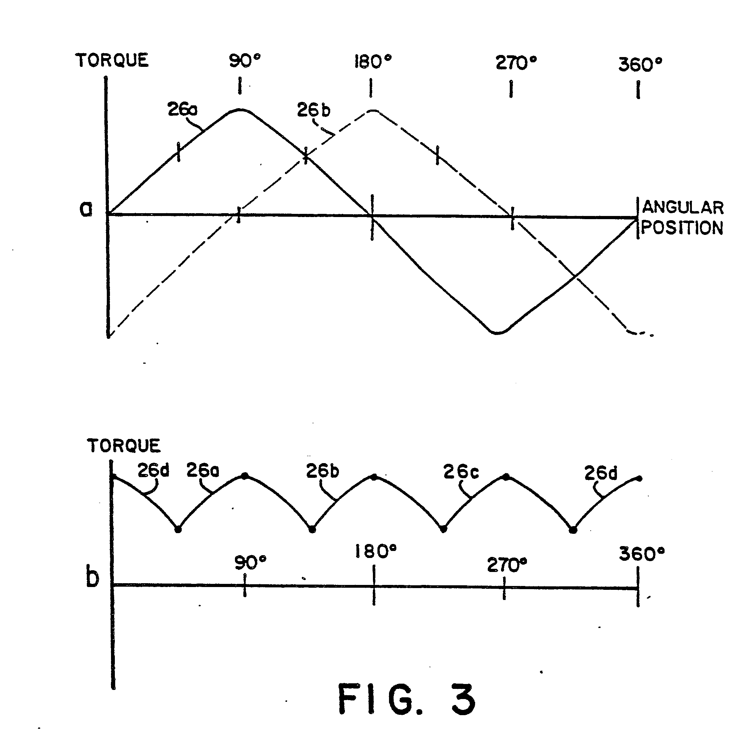

The solid curve 26a' in FIG. 3a represents generally the torque applied to the impeller assembly 18 by continuously energizing with a constant current, a single stator element, such as the element 26a, as a function of the angular position of the impeller assembly 18 in electrical degrees. The torque output from the next successive stator element 26b is also indicated by a broken line 26b', again with respect through the same electrical reference position. As can be seen the torque output of each successive stator element 26a through 26d lags that of the preceding element by approximately 90 degrees. Peak torque output is provided by activating each stator element 26a through 26d successively at 90 degree increments of the impeller assembly rotation and at points offset 45 degrees (electrical) from the peak torque output positions. The net torque applied to the impeller 18 by successively commutating each of the stator elements 26a-26d in this fashion is illustrated in FIG. 3b with the contribution of each stator element identified, by corresponding line segments 26a'-26d'.

In the embodiment depicted, which is strictly illustrative, a pair of Hall effect switches 30a and 30b are located 90 degrees apart with respect to the axis of rotation 36. The first switch 30a is located so as to output a high level signal when the impeller assembly 18 is between the 45° and 225° (electrical) positions while the second switch 30b is positioned to output a high level signal when the impeller assembly 18 is between the 135° and 315° (electrical) positions. The signals generated and outputted by the switches 30a and 30b as a function of the angular position (electrical) of the impeller assembly 18, are depicted in FIG's 5a and 5b, respectively.

Referring now to FIG's. 5a and 5b, A represents the high level output of the sensor 30a and $\bar{A}$ represents its low level output while B and $\bar{B}$ represent the corresponding high and low output levels of the second sensor 30b. The following concurrent switch outputs correspond to the indicated electrical angular positions of the impeller assembly 18 and are used to control energization of the stator elements 26a and 26d successively: A+$\bar{B}$ (45° to 135°), A+B (135° to 225°), $\bar{A}$+B (225° to 315°) and $\bar{A}$+$\bar{B}$ (315° to 45°). An exemplary logic control circuit 132, which is envisioned to be a component of the control logic circuit 32, for controlling successive activation of the stator elements 26a to 26d is depicted in FIG. 4. Outputs from the two sensors 30a and 30b are carried via lines 130a and 130b, respectively, to a series of AND gates 50-56. The output of sensor 30a fed into AND gates 54 and 56 is inverted by inverters 58 and 60. Similarly, the output from sensor 30b fed into AND gates 50 and 56 is inverted by inverters 62 and 64, respectively. The high and low level outputs of each AND gate 50 through 56 are depicted in FIG's. 4c through 4f, respectively, as a function of the angular position of the impeller assembly 18. The outputs of each AND gate 50 through 56 is fed to a corresponding power control switch 80 through 86. The high level output of each AND gate 50 to 56 is used to activate the corresponding switch 80 to 86, energizing a connected stator element 26a to 26d.

FIG's. 6a and 6b depict in diagrammatic side and end views, respectively, an envisioned second centrifugal pump/ motor impeller embodiment operating in a manner similar to the embodiment described with respect to the previous figures. In the second embodiment, an impeller assembly 118 is supported by an axle 120 or other suitable means in a pump chamber 116. The housing 110 forming the pump chamber 116 includes a recess 117 into which a portion of the impeller assembly 118 extends. Fixedly attached to (or incorporated into) the impeller assembly 118 extending into the recess 117, is a cylindrical two-pole permanent magnet 124. Arrayed about the circular magnet 124 outside the recess 117 are a plurality of stator elements 126a through 126d lying in the same plane as the circular magnet 124. Again, a pair of Hall switches 130a and 130b are positioned to sense angular position of the impeller assembly 118 and control the energization of the stator elements 126a-126d as previously described.

FIG's. 7a and 7b depict in diagrammatic side and end sectioned views, respectively, a third envisioned centrifugal pump/motor configuration. In this embodiment, an impeller assembly 218 is again provided, supported by a shaft 220 or other means suitable for free rotation in a pump chamber 216. Again the impeller assembly 218 includes a cylindrical permanent magnet 224. The cylindrical magnet encircles a portion of the pump housing 210 containing a plurality of stator elements 226 and a plurality of impeller angular position sensors 230. This configuration is also particularly suited for driving a turbine type impeller.

FIG. 8 depicts diagramatically yet another envisioned embodiment 100 of the invention. The apparatus 100 includes a pump chamber housing or case 102 which includes a fluid outlet 101 and a fluid outlet 103. The interior of the pump case 102 forms a pumping chamber in which is located a combined pump impeller/motor armature assembly 120'. The impeller assembly 120 includes a permanent magnet disk 106 supported by a flux return and bearing support plate 105. The disk 106 provides a pair of opposite magnetic poles at the disk face juxtaposed to a partition or "diaphragm" 110' and parallel to the plane of rotation of the assembly 120'. The assembly 120' is supported on a rotor support spindle 107 by means of a radial support bearing 108 and combined radial and thrust support bearing 109. The assembly 120' further includes a number of impeller blades 104 (only two of which are depicted diagramatically for illustration) provided on a surface of the support plate 105 opposite the permanent magnet 106 for urging fluid from the inlet 101 through the outlet 103. The spindle 107 is attached to a diaphragm 110' for support. The diaphragm 110' separates the pump chamber formed by the interior of the pump case 102 from a motor compartment formed by the interior of a housing piece 114. The diaphragm 110' is held in position by means of a ring 113 mated by suitable means such as screws or nuts and bolts (not depicted) with a flange 102a of the pump housing 102. The face of the flange 102a is configured for mating with the juxtaposed face of the ring 113. The housing piece 114 also has a flange 114a with a face configured for mating the juxtaposed face of the ring 113 and is separately attached for access to the motor compartment without disturbance of the diaphragm 110'. O-rings 111 are provided for water-tight sealing. Contained within the motor compartment formed by the diaphragm 110', ring 113 and housing piece 114 are a motor stator assembly 119 and pair of Hall sensors 118' (only one of which is depicted). The Hall sensors are located in a plane approximately parallel to the plane of the diaphragm 110' and are used to sense the angular position of the impeller assembly 120'. The motor compartment also contains an electronic package 112 (indicated in phantom) of the type previously described, providing power and electronic commutation to the stator 119. The stator assembly 119 includes a tape-wound laminate ring-shaped core 117' (bisected in FIG. 8). A pair of stator windings 116a and 116b, depicted in sectioned view, are provided to form two stator elements for two-phase operation. In this configuration, the Hall sensors 118' are spaced 90° apart with respect to the center of spindle 107, magnet 106 and winding 119, all of which are coaxial. Additional windings may be provided in a known manner for providing higher orders of poly-phase operation.

Because the impellers in each of the depicted, envisioned embodiments are driven by magnetically induced torque, the impellers and pump chamber may be separated from the stators and other electronic elements in a motor chamber thereby eliminating a drive shaft extending through the pump chamber wall and a seal in the wall about the shaft. The indicated designs provide the improved reliability of a sealess pump design, a reduced number of rotating components as compared with the existing pump/motor combinations using motor driven rotating magnets to rotate an impeller and the preferred performance of a direct current motor directly driving an armature/impeller assembly.

Other combinations of logic and transistor elements can be used to accomplish the results of the depicted control circuit 32. The outputs of the logic gates 50-56 can be used to control bipolar power supplies or energize one of a pair of reversed windings on each of these stator elements 26 so as to simultaneously energize opposite pairs of stator elements.(i.e. 26a with 26c and 26b with 26d) with opposite polarities to improve the power output of the apparatus. The torque output of the depicted devices may be smoothed by providing a greater number of stator elements as well as a plurality of permanent magnets on the rotor assembly.

CLAIMS

1. A pump apparatus comprising:

pump housing means having a fluid inlet, a fluid outlet and a pump chamber in fluid communication with the inlet and the outlet;

rotating impeller means located within the pump chamber for urging fluid between the inlet and the outlet and having at least one permanent magnet providing a pair of opposite magnetic poles in a plane of rotation of the impeller means;

a plurality of stator elements positioned in a plane parallel to a plane of rotation of the impeller means;

sensing means for identifying angular positions of the impeller means; and

control means responsive to output of said sensing means for selectively energizing said stator elements to create a rotating magnetic field starting and driving said impeller means.

2. The apparatus of claim 1 wherein said sensing means comprises Hall effect switches.

3. Apparatus as claimed in claim 1 or claim 2 wherein the rotary impeller means is supported for free rotation within said pump chamber and comprises a base incorporating a circular magnet, the poles of which lie in a plane substantially parallel to the plane of said impeller means.

4. Apparatus as claimed in any preceding claims wherein each stator element comprises a magnetizable core and one or more windings about said core, which when energised, create a magnetic field which imparts a torque on said rotor means.

5. Apparatus as claimed in any one of claims 2 to 4 wherein the Hall effect switches output a high level signal when a magnetic pole of the impeller means is juxtaposed therewith and a lower level signal when the said magnetic poles are remote therefrom.

6. Apparatus as claimed in claim 1 or claim 2 wherein the impeller means comprises a permanent disc magnet and a flux return and bearing support plate;

- 3 -

said disc being supported on a rotor support spindle and having a number of impeller blades carried therewith for the purpose of urging fluid from said inlet to said outlet.

7.    Apparatus as claimed in claim 1 and substantially as herein described with reference to the accompanying drawings.

0105687

FIG. 1

FIG. 2

2/6 0105687

FIG. 3

0105687

3/6

FIG. 4

FIG. 5

416

0105687

FIG. 6a

FIG. 6b

FIG. 7a

FIG. 7b

6/6

FIG. 8

0105687

European Patent Office

**EUROPEAN SEARCH REPORT**

Application number

## DOCUMENTS CONSIDERED TO BE RELEVANT

EP 83305720.1

| Category | Citation of document with indication, where appropriate, of relevant passages | Relevant to claim | CLASSIFICATION OF THE APPLICATION (Int. Cl. ³) |
|---|---|---|---|
| Y | <u>GB - A - 1 195 747</u> (LICENTIA) <br> * Page 1, line 63 - page 2, line 2; fig. * <br> -- | 1-7 | F 04 D 13/06 <br> H 02 K 5/128 |
| Y | <u>GB - A - 1 473 436</u> (FORD) <br> * Page 2, line 42 - page 3, line 72; fig. 1-3 * <br> -- | 1-7 | |
| A,D | <u>US - A - 3 938 914</u> (ZIMMERMANN) <br> -- | | |
| A,D | <u>US - A - 3 802 804</u> (ZIMMERMANN) <br> -- | | |
| A | <u>GB - A - 1 187 866</u> (SEALD MOTOR CONSTRUCTION) <br> ---- | | |

**TECHNICAL FIELDS SEARCHED (Int. Cl ³)**

F 04 B
F 04 D
H 02 K

The present search report has been drawn up for all claims

| Place of search | Date of completion of the search | Examiner |
|---|---|---|
| VIENNA | 15-12-1983 | WITTMANN |

EPO Form 1503 03.82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on. or after the filing date
D : document cited in the application
L : document cited for other reasons

& : member of the same patent family, corresponding document